# EUROPEAN PATENT SPECIFICATION

(11) **EP 3 705 285 B1**
(45) Date of publication and mention of the grant of the patent: **09.03.2022**
(21) Application number: 20152187.9
(22) Date of filing: 16.01.2020
(51) Int. Cl.: B32B 3/02, B29C 70/00, B32B 1/00, B32B 5/02, B32B 5/12, B32B 5/26, B32B 7/022, B64C 1/06

(54) **COMPOSITE STRUCTURE AND METHOD OF FORMING THEREOF**
VERBUNDSTRUKTUR UND VERFAHREN ZU DEREN FORMUNG
STRUCTURE COMPOSITE ET PROCÉDÉ DE FORMATION DE CELLE-CI

(30) Priority: 07.03.2019 US 201916295419
(43) Date of publication of application: 09.09.2020
(73) Proprietor: The Boeing Company, Chicago, IL 60606-1596 (US)
(72) Inventor: Sanders, Christopher, Chicago, IL 60606-1596 (US); Kwon, Hyukbong, Chicago, IL 60606-1596 (US); Carlson, Lisa, Chicago, IL 60606-1596 (US); Pham, Khanh Mai, Chicago, IL 60606-1596 (US)
(74) Representative: Witte, Weller & Partner Patentanwälte mbB

(56) References cited:
- DE-A1-102013 013 388
- US-A- 5 100 713
- US-A1- 2017 100 911
- US-A1- 2018 117 859

## Description

### FIELD

The field relates generally to composite structures and, more specifically, to a punch formed blade stringer composite structure having enhanced impact and crack propagation resistance.

### BACKGROUND

The fabrication of multi-layer laminate structures generally includes bonding layers of metallic (e.g., aluminum, titanium, or corrosion resistant steel (CRES)) and/or non-metallic (e.g., carbon fiber, boron, or fiberglass) reinforcement material together with a matrix material to form a rigid structure. The reinforcement material strengthens and stiffens the laminate structure, and the matrix material supports the reinforcement material after a curing process. Multi-layer laminate structures generally have a high strength-to-weight ratio and may be formed in a variety of shapes and sizes. At least some known aircraft components are fabricated from multi-layer laminate structures of non-metallic composite materials such as carbon-fiber-reinforced polymer (CFRP). The composite materials are used in combination with metallic materials, such as aluminum, titanium, and/or steel, to reduce the overall weight of the aircraft. Reducing the overall weight generally contributes to increasing the fuel efficiency of the aircraft. However, common multi-layer laminate structures fabricated from CFRP may be susceptible to damage, such as the formation of micro-cracks and delamination of the structure during service and/or manufacturing thereof. Known damage to such structures may be small and difficult to detect during scheduled maintenance.

This section is intended to introduce the reader to various aspects of art that may be related to various aspects of the disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

US 2018/0117859 A1 in accordance with its abstract states: An example method for forming a flat composite charge into a composite blade stiffener includes cutting a flat composite charge along a cut line into a first piece and a second piece having an angle, positioning the first piece and the second piece of the flat composite charge on a forming mandrel about a tooling plunger, activating the tooling plunger to drive the first piece and the second piece into a cavity of the forming mandrel resulting in the first piece and the second piece folding at the cut line, withdrawing the tooling plunger from the cavity of the forming mandrel, compressing the forming mandrel to apply a lateral pressure to the first piece and the second piece folded into the cavity, and applying a vertical pressure to a first flange and a second flange of the first piece and the second piece, respectively, to form the composite blade stiffener.

US 2017/0100911 A1 in accordance with its abstract states: A composite structure including a composite body having an outer surface and a detection layer connected to the outer surface, the detection layer being discontinuous and including glass fibers embedded in a matrix material.

DE 10 2013 013388 A1 in accordance with its abstract states: The disclosure relates to a fiber composite component, comprising a laminate made of several two-dimensionally extended fiber material layers stacked with one another in a hardened matrix material. According to the disclosure, extensive binder material layers are provided, which are arranged in the laminate between adjacent fiber material layers and are not connected over their entire surface but only in predetermined areas to the adjacent fiber material layers. The disclosure also relates to a method for producing such a fiber composite component (10).

### BRIEF DESCRIPTION

In one aspect, a composite structure is provided as defined in claim 1. It includes a multi-layer laminate including a plurality of layers of material, and at least one crack barrier layer extending within the plurality of layers of material. The multi-layer laminate is folded to define a first web region and a second web region in a face-to-face relationship, and a folded tip region defined between the first web region and the second web region. The at least one crack barrier layer is configured to restrict crack propagation from spreading through the plurality of layers of material in the folded tip region.

In another aspect, a stringer is provided as defined in claim 15 includes a web including a first web region, a second web region in a face-to-face relationship with the first web region, and a folded tip region defined between the first and second web regions. A base extends from the web. The base includes a first base region extending from the first web region, and a second base region extending from the second web region. The web and the base are formed from a multi-layer laminate including a plurality of layers of material and at least one crack barrier layer extending within the plurality of layers of material. The at least one crack barrier layer is configured to restrict crack propagation from spreading through the plurality of layers of material in the folded tip region.

In yet another aspect, a method of forming a composite structure is provided as defined in claim 9. It includes forming a multi-layer laminate including a plurality of layers of material and at least one crack barrier layer extending within the plurality of layers of material, and folding the multi-layer laminate to define a first web region and a second web region in a face-to-face relationship, and a folded tip region defined between the first web region and the second web region. The method also includes curing the multi-layer laminate, wherein the at least one crack barrier layer is configured to restrict crack propagation from spreading through the plurality of layers of material in the folded tip region.

### BRIEF DESCRIPTION OF THE DRAWINGS

FIG. 1 is an illustration of an example composite structure.
FIG. 2 is an enlarged view of a folded tip region of the composite structure shown in FIG. 1.
FIG. 3 illustrates a series of process steps for forming the composite structure shown in FIG. 1.

Corresponding reference characters indicate corresponding parts throughout the drawings.

### DETAILED DESCRIPTION

The embodiments described herein relate to a punch formed blade stringer composite structure having enhanced impact and crack propagation resistance. The composite structure may be used as a stringer in an aircraft structure. The composite structure is formed from a multi-layer laminate structure that has been folded to define a base, a web, and a folded tip region in the web. At least some known composite manufacturers cut the folded tip region from the web to reduce the risk of cracks or delamination, that initiate in the folded tip region, from propagating to the remainder of the composite structure. In the example embodiment, the multi-layer laminate structure is formed from a plurality of layers of material and a crack barrier layer extending within the plurality of layers of material. The crack barrier layer is positioned to facilitate restricting crack propagation from spreading through the plurality of layers in the folded tip region. In addition, in some embodiments, a detection layer is extended across the folded tip region to facilitate providing impact damage detection. The resulting composite structure has increased strength, a more robust tip resistant to lateral impacts, and barely visible impact damage detection capability.

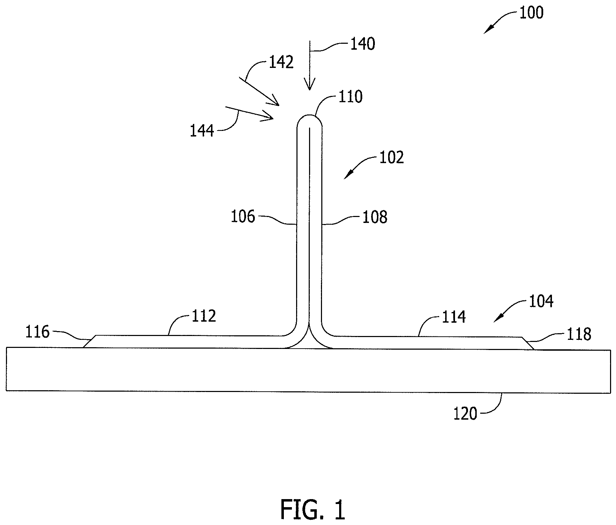

FIG. 1 is an illustration of an example composite structure 100. In the example embodiment, composite structure 100 includes a web 102 and a base 104 extending perpendicularly relative to web 102. Alternatively, web 102 is oriented obliquely relative to base 104. Web 102 includes a first web region 106, a second web region 108 in a face-to-face relationship with first web region 106, and a folded tip region 110 defined between first web region 106 and second web region 108. Base 104 includes a first base region 112 extending from first web region 106, and a second base region 114 extending from second web region 108. First base region 112 includes a first tapered end 116, and second base region 114 includes a second tapered end 118. In some embodiments, composite structure 100 is coupled to a skin panel 120 of an aircraft (not shown), or a separate base charge (not shown), for example. Composite structure 100 facilitates supporting, and increasing the rigidity of, skin panel 120.

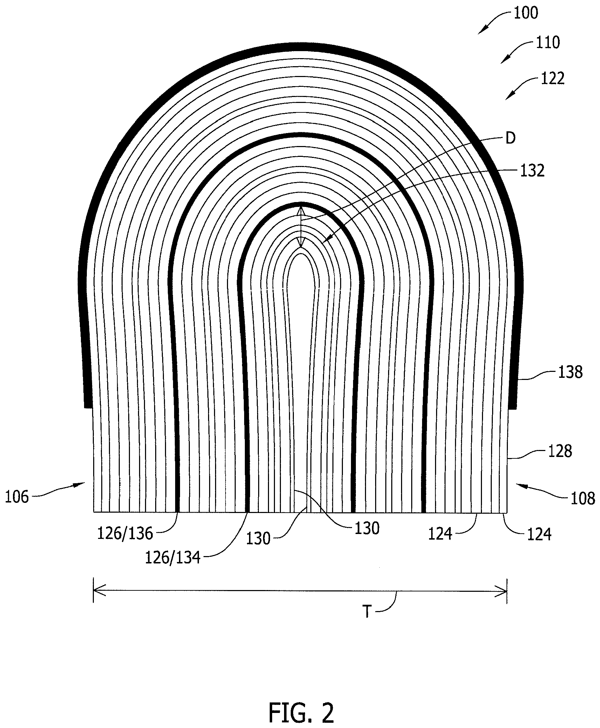

FIG. 2 is an enlarged illustration of folded tip region 110. In the example embodiment, composite structure 100 includes a multi-layer laminate 122 that includes a plurality of layers 124 of material, and at least one crack barrier layer 126 extending within the plurality of layers 124 of material. For example, multi-layer laminate 122 has a first surface 128 and an opposing second surface 130. As will be described in more detail below, multi-layer laminate 122 is folded on itself to form composite structure 100. When folded, first surface 128 is exposed to an ambient environment, and second surface 130 in first web region 106 and in second web region 108 is in face-to-face contact for defining a central core 132.

The at least one crack barrier layer 126 is positioned between outer surface 128 and central core 132. For example, the plurality of layers 124 and crack barrier layer 126 are aligned coterminously in at least one dimension of composite structure 100. More specifically, in one embodiment, layers 124 and crack barrier layer 126 extend from first tapered end 116 to second tapered end 118 such that the at least one crack barrier layer 126 extends throughout folded tip region 110. Alternatively, crack barrier layer 126 has a shorter length and is limited to extending within certain regions of composite structure 100, such as only extending across folded tip region 110. Cracks and/or delamination may initiate within central core 132 and propagate through multi-layer laminate 122. As such, the at least one crack barrier layer 126 is positioned to facilitate restricting crack propagation from spreading through the plurality of layers 124 in folded tip region 110.

In the example embodiment, the at least one crack barrier layer 126 includes a first crack barrier layer 134 and a second crack barrier layer 136 spaced from each other within multi-layer laminate 122. First crack barrier layer 134 is positioned closer to central core 132 than second crack barrier layer 136, and second crack barrier layer 136 is positioned closer to outer surface 128 than first crack barrier layer 134. In addition, first crack barrier layer 134 is positioned closer to central core 132 than to outer surface 128. As such, first crack barrier layer 134 is positioned a predetermined distance D from central core 132. First crack barrier layer 134 restricts crack propagation that may have initiated at central core 132 from spreading beyond predetermined distance D. In one embodiment, the layup location of first crack barrier layer 134 within multi-layer laminate 122 is determined as a function of a threshold thickness of folded tip region 110. As such, a crack (not shown) in multi-layer laminate 122 is restricted from propagating to a length greater than the threshold thickness. The threshold thickness may be about 50 percent, about 40 percent, or about 25 percent of a total thickness T of folded tip region 110. In addition, second crack barrier layer 136 is positioned a distance from first crack barrier layer 134 to provide redundant crack propagation protection in the event crack propagation extends beyond first crack barrier layer 134.

Layers 124 of material and crack barrier layer 126 may be fabricated from any material that enables composite structure 100 to function as described herein. In the example embodiment, layers 124 have a first structural configuration, and crack barrier layer 126 has a second structural configuration different from the first structural configuration. As such, positioning crack barrier layer 126 fabricated from different material than the remainder of layers 124 in multi-layer laminate 122 facilitates forming a discontinuity within multi-layer laminate 122, which facilitates reducing the spread of crack propagation therein.

In addition, layers 124 and crack barrier layer 126 are selected for inclusion in multi-layer laminate 122 based on resin compatibility and thermal expansion considerations. For example, layers 124 and crack barrier layer 126 may be pre-impregnated with resin, which is selected to enable sufficient compatibility for forming multi-layer laminate 122. Layers 124 and crack barrier layer 126 may be impregnated with the same resin or a different resin. In addition, layers 124 and crack barrier layer 126 are selected such that the materials of layers 124 and crack barrier layer 126 have a difference in coefficient of thermal expansion less than a predetermined threshold. The predetermined threshold may be 25 percent, 20 percent, or 10 percent, based on an overall difference in coefficient of thermal expansion values of the material of layers 124 and crack barrier layer 126. As such, layers 124 and crack barrier layer 126 are selected to facilitate forming multi-layer laminate 122 that is structurally sound with a reduced likelihood of delamination from occurring therein. In one embodiment, layers 124 are fabricated from a unidirectional, pre-impregnated, carbon fiber material, and crack barrier layer 126 is fabricated from a bidirectional, pre-impregnated, carbon fiber material. The bidirectional carbon fiber material may be a woven sheet of carbon fiber having fibers oriented in any direction that enables crack barrier layer 126 to function as described herein. For example, the woven sheet may have a 0/90 or 45/45 degree fiber orientation.

In the example embodiment, multi-layer laminate 122 also includes a detection layer 138 extending across folded tip region 110, and across at least a portion of first web region 106 and second web region 108. Detection layer 138 may be fabricated from any material that enables composite structure 100 to function as described herein. In one embodiment, detection layer 138 is fabricated from a glass fiber-reinforced plastic material, also commonly referred to as fiberglass. The composition of detection layer 138 is selected to facilitate visualizing impact damage induced to composite structure 100. For example, fiberglass is generally more brittle than CFRP material such that the application of the same force to fiberglass or CFRP material would be more readily visible and more easily detectable on the fiberglass.

Detection layer 138 also facilitates protecting folded tip region 110 from impact damage. For example, referring to FIG. 1, folded tip region 110 may be susceptible to encountering different types of impacts, such as a first impact 140, a second impact 142, and a third impact 144. First impact 140 is generally axially aligned with web 102, second impact 142 is oriented at about 45 degrees relative to web 102, and third impact 144 is oriented generally laterally to web 102 at about 10 degrees relative to web 102. Without detection layer 138, composite structure 100 having folded tip region 110 is generally capable of sustaining non-critical impact damage from third impact 144 having a force less than a predetermined threshold. The addition of detection layer 138 enables composite structure 100 to be capable of sustaining non-critical impact damage from first impact 140 and second impact 142 having forces less than a predetermined threshold. As such, folded tip region 110 provides robust shear resistance to facilitate withstanding lateral impact damage induced by third impact 144, and detection layer 138 augments the robustness of folded tip region 110 to facilitate withstanding damage induced by first impact 140 or second impact 142. Folded tip region 110 is also resistant to interlaminar buckling.

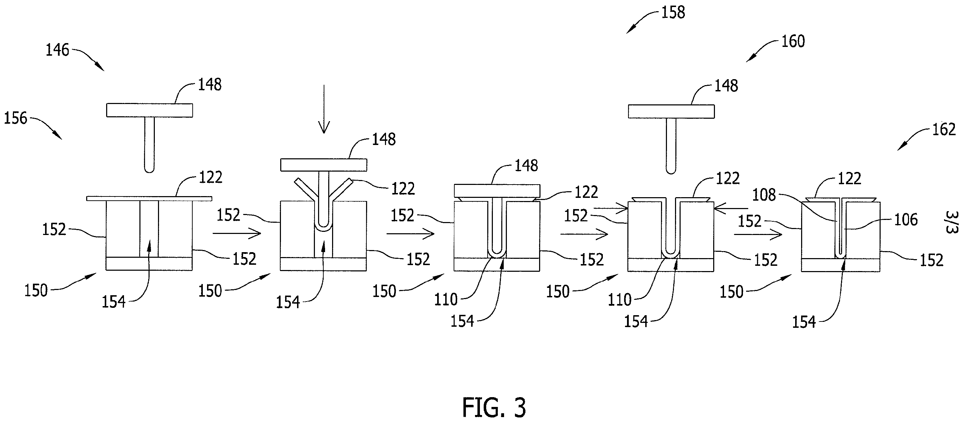

FIG. 3 illustrates a series of process steps for forming composite structure 100 (shown in FIG. 1). In the example embodiment, a punch-forming apparatus 146 is used to form composite structure 100. Punch-forming apparatus 146 includes a punch tool 148 and a die 150. Die 150 includes a pair of die blocks 152 spaced a distance from each other to define a cavity 154 therebetween. Punch tool 148 is translatable relative to die 150, and die blocks 152 are translatable relative to each other to adjust the size of cavity 154.

In the example embodiment, punch tool 148 is initially positioned a distance from die 150. A first process step 156 includes forming multi-layer laminate 122 and positioning multi-layer laminate 122 on die 150. Multi-layer laminate 122 is positioned to extend across cavity 154. A second process step 158 includes translating punch tool 148 towards die 150 to facilitate forcing multi-layer laminate 122 into cavity 154 and initiate folding multi-layer laminate 122 to define folded tip region 110. Once punch tool 148 is fully inserted into cavity 154, punch tool 148 is removed therefrom in a third process step 160 such that only multi-layer laminate 122 remains within cavity 154. A fourth process step 162 includes translating die blocks 152 towards each other to facilitate further folding multi-layer laminate 122 such that first web region 106 and second web region 108 are in a face-to-face relationship. Multi-layer laminate 122 may then be removed from die 150 and cured to form composite structure 100, or cured in-situ within die 150.

Example embodiments of a composite structure folded to define a folded tip region having a crack barrier layer extending therein are described above in detail. Aspects of the composite structure are not limited to the specific embodiments described herein, but rather, components of the composite structure may be used independently and separately from other components described herein. For example, aspects of the composite structure may be included in any composite structure where inhibiting crack propagation from spreading therein is desired.

When introducing elements of the present disclosure or the embodiment(s) thereof, the articles "a", "an", "the" and "said" are intended to mean that there are one or more of the elements. The terms "comprising," "including," "containing" and "having" are intended to be inclusive and mean that there may be additional elements other than the listed elements. The use of terms indicating a particular orientation (e.g., "top", "bottom", "side", etc.) is for convenience of description and does not require any particular orientation of the item described. is intended that all matter contained in the above description and shown in the accompanying drawing[s] shall be interpreted as illustrative and not in a limiting sense.

## Claims

1. A composite structure (100) comprising:
a multi-layer laminate (122) comprising:
a plurality of layers (124) of material; and
at least one crack barrier layer (126) extending within the plurality of layers (124) of material,
wherein the multi-layer laminate (122) is folded to define a first web region (106) and a second web region (108) in a face-to-face relationship, and a folded tip region (110) defined between the first web region (106) and the second web region (108), wherein the at least one crack barrier layer (126) is configured to restrict crack propagation from spreading between the plurality of layers (124) of material in the folded tip region (110), and
wherein the at least one crack barrier layer (126) is fabricated from a bidirectional carbon fiber material, and the plurality of layers (124) of material have a structural configuration different from that of the at least one crack barrier layer (126).

2. The composite structure (100) in accordance with Claim 1, wherein the multi-layer laminate (122) is folded to further define, in sequence, a first base region (112), the first web region (106), the folded tip region (110), the second web region (108), and a second base region (114), the multi-layer laminate (122) folded such that the first and second web regions (106, 108) are oriented perpendicularly or obliquely relative to the first and second base regions (112, 114).

3. The composite structure (100) in accordance with any of Claims 1-2, wherein the plurality of layers (124) of material are fabricated from a unidirectional carbon fiber material.

4. The composite structure (100) in accordance with any of Claims 1-3, wherein the multi-layer laminate (122) further comprises a detection layer (138) extending across the folded tip region (110), wherein the detection layer is fabricated from a glass fiber reinforced plastic material.

5. The composite structure (100) in accordance with any of Claims 1-4, wherein the at least one crack barrier layer (126) comprises a first crack barrier layer (134) and a second crack barrier layer (136) spaced from each other within the multi-layer laminate (122).

6. The composite structure (100) in accordance with any of Claims 1-5, wherein the plurality of layers (124) of material and the at least one crack barrier layer (126) are aligned coterminously in at least one dimension.

7. The composite structure (100) in accordance with any of Claims 1 to 6, wherein the bidirectional carbon fiber material of the crack barrier layer (126) is a woven sheet of carbon fiber having fibers with a 0/90 degree fiber orientation.

8. The composite structure (100) in accordance with any of Claims 1 to 6, wherein the bidirectional carbon fiber material of the crack barrier layer (126) is a woven sheet of carbon fiber having fibers with a 45/45 degree fiber orientation.

9. A method of forming a composite structure (100), the method comprising:
forming a multi-layer laminate (122) including a plurality of layers (124) of material and at least one crack barrier layer (126) extending within the plurality of layers (124) of material;
folding the multi-layer laminate (122) to define a first web region (106) and a second web region (108) in a face-to-face relationship, and a folded tip region (110) defined between the first web region (106) and the second web region (108); and
curing the multi-layer laminate (122), wherein the at least one crack barrier layer (126) is configured to restrict crack propagation from spreading between the plurality of layers (124) of material in the folded tip region (110);
wherein the at least one crack barrier layer (126) is fabricated from a bidirectional carbon fiber material, and the plurality of layers (124) of material have a structural configuration different from that of the at least one crack barrier layer (126).

10. The method in accordance with Claim 9, wherein folding the multi-layer laminate (122) comprises folding the multi-layer laminate (122) to further define, in sequence, a first base region (112), the first web region (106), the folded tip region (110), the second web region (108), and a second base region (114), the multi-layer laminate (122) folded such that the first and second web region (108)s are oriented perpendicularly relative to the first and second base region (114).

11. The method in accordance with any of Claims 9-10, wherein forming a multi-layer laminate (122) comprises forming the multi-layer laminate (122) from the plurality of layers (124) fabricated from a unidirectional carbon fiber material.

12. The method in accordance with any of Claims 9-11, wherein forming a multi-layer laminate (122) comprises positioning a detection layer (138) on the multi-layer laminate (122) for extension across the folded tip region (110) when the multi-layer laminate (122) is folded, wherein the detection layer is fabricated from a glass fiber reinforced plastic material.

13. The method in accordance with any of Claims 9 to 12, wherein the bidirectional carbon fiber material of the crack barrier layer (126) is a woven sheet of carbon fiber having fibers with a 0/90 degree fiber orientation.

14. The method in accordance with any of Claims 9 to 12, wherein the bidirectional carbon fiber material of the crack barrier layer (126) is a woven sheet of carbon fiber having fibers with a 45/45 degree fiber orientation.

15. A stringer in an aircraft structure comprising a composite structure as defined in any of claims 1 to 8.

## Patentansprüche

1. Verbundstruktur (100), die aufweist:
ein mehrschichtiges Laminat (122), umfassend:
eine Vielzahl von Materialschichten (124); und
mindestens eine Riss-Barriereschicht (126), die sich innerhalb der Vielzahl von Materialschichten (124) erstreckt,
wobei das mehrschichtige Laminat (122) gefaltet ist, um einen ersten Stegbereich (106) und einen zweiten Stegbereich (108) in einer Fläche-an-Fläche-Beziehung und einen gefalteten Spitzenbereich (110) zu definieren, der zwischen dem ersten Stegbereich (106) und dem zweiten Stegbereich (108) definiert ist, wobei die mindestens eine Riss-Barriereschicht (126) so konfiguriert ist, dass sie die Ausbreitung eines Risses zwischen der Vielzahl von Schichten (124) des Materials in dem gefalteten Spitzenbereich (110) einschränkt, und
wobei die mindestens eine Riss-Barriereschicht (126) aus einem bidirektionalen Kohlefaser-Material hergestellt ist und die mehreren Materialschichten (124) eine strukturelle Konfiguration aufweisen, die sich von derjenigen der mindestens einen Riss-Barriereschicht (126) unterscheidet.

2. Verbundstruktur (100) nach Anspruch 1, wobei das mehrschichtige Laminat (122) gefaltet ist, um nacheinander einen ersten Basisbereich (112), den ersten Stegbereich (106), den gefalteten Spitzenbereich (110), den zweiten Stegbereich (108) und einen zweiten Basisbereich (114) zu definieren, wobei das mehrschichtige Laminat (122) so gefaltet ist, dass der erste und der zweite Stegbereich (106, 108) senkrecht oder schräg zu dem ersten und dem zweiten Basisbereich (112, 114) ausgerichtet sind.

3. Verbundstruktur (100) nach einem der Ansprüche 1 bis 3, wobei die mehreren Materialschichten (124) aus einem unidirektionalen Kohlefaser-Material hergestellt sind.

4. Verbundstruktur (100) nach einem der Ansprüche 1 bis 3, wobei das mehrschichtige Laminat (122) ferner eine Erfassungsschicht (138) umfasst, die sich über den gefalteten Spitzenbereich (110) erstreckt, wobei die Erfassungsschicht aus einem glasfaserverstärkten Kunststoffmaterial hergestellt ist.

5. Verbundstruktur (100) nach einem der Ansprüche 1 bis 4, wobei die mindestens eine Riss-Barriereschicht (126) eine erste Riss-Barriereschicht (134) und eine zweite Riss-Barriereschicht (136) umfasst, die innerhalb des mehrschichtigen Laminats (122) voneinander beabstandet sind.

6. Verbundstruktur (100) nach einem der Ansprüche 1 bis 5, wobei die mehreren Materialschichten (124) und die mindestens eine Riss-Barriereschicht (126) in mindestens einer Dimension angrenzend ausgerichtet sind.

7. Verbundstruktur (100) nach einem der Ansprüche 1 bis 6, wobei das bidirektionale Kohlefaser-Material der Riss-Barriereschicht (126) ein gewebtes Blatt aus Kohlefasern ist, das Fasern mit einer 0/90 Grad Faserorientierung aufweist.

8. Verbundstruktur (100) nach einem der Ansprüche 1 bis 6, wobei das bidirektionale Kohlefaser-Material der Riss-Barriereschicht (126) ein gewebtes Blatt aus Kohlefasern ist, das Fasern mit einer 45/45 Grad Faserorientierung aufweist.

9. Verfahren zur Herstellung einer Verbundstruktur (100), wobei das Verfahren umfasst:
Bilden eines mehrschichtigen Laminats (122), das eine Vielzahl von Materialschichten (124) und mindestens eine sich innerhalb der Vielzahl von Materialschichten (124) erstreckende Riss-Barriereschicht (126) enthält;
Falten des mehrlagigen Laminats (122), um einen ersten Stegbereich (106) und einen zweiten Stegbereich (108) in einer Fläche-an-Fläche-Beziehung und einen gefalteten Spitzenbereich (110) zu definieren, der zwischen dem ersten Stegbereich (106) und dem zweiten Stegbereich (108) definiert ist; und
Aushärten des mehrschichtigen Laminats (122), wobei die mindestens eine Riss-Barriereschicht (126) so konfiguriert ist, dass sie die Ausbreitung von Rissen zwischen den mehreren Materialschichten (124) im Bereich der gefalteten Spitze (110) einschränkt;
wobei die mindestens eine Riss-Barriereschicht (126) aus einem bidirektionalen Kohlefaser-Material hergestellt ist und die mehreren Materialschichten (124) eine strukturelle Konfiguration aufweisen, die sich von derjenigen der mindestens einen Riss-Barriereschicht (126) unterscheidet.

10. Verfahren nach Anspruch 9, wobei das Falten des mehrschichtigen Laminats (122) das Falten des mehrschichtigen Laminats (122) umfasst, um nacheinander einen ersten Basisbereich (112), den ersten Stegbereich (106), den gefalteten Spitzenbereich (110), den zweiten Stegbereich (108) und einen zweiten Basisbereich (114) zu definieren, wobei das mehrschichtige Laminat (122) so gefaltet ist, dass der erste und der zweite Stegbereich (108) rechtwinklig zu dem ersten und dem zweiten Basisbereich (114) ausgerichtet sind.

11. Verfahren nach einem der Ansprüche 9-10, wobei das Bilden eines mehrschichtigen Laminats (122) das Bilden des mehrschichtigen Laminats (122) aus der Vielzahl von Schichten (124) umfasst, die aus einem unidirektionalen Kohlefaser-Material hergestellt sind.

12. Verfahren nach einem der Ansprüche 9-11, wobei das Ausbilden eines mehrschichtigen Laminats (122) das Positionieren einer Erfassungsschicht (138) auf dem mehrschichtigen Laminat (122) zur Ausdehnung über den gefalteten Spitzenbereich (110) umfasst, wenn das mehrschichtige Laminat (122) gefaltet wird, wobei die Erfassungsschicht aus einem glasfaserverstärkten Kunststoffmaterial hergestellt ist.

13. Verfahren nach einem der Ansprüche 9 bis 12, wobei das bidirektionale Kohlefaser-Material der Riss-Barriereschicht (126) ein gewebtes Blatt aus Kohlefasern ist, das Fasern mit einer 0/90 Grad Faserorientierung aufweist.

14. Verfahren nach einem der Ansprüche 9 bis 12, wobei das bidirektionale Kohlefasermaterial der Riss-Barriereschicht (126) ein gewebtes Blatt aus Kohlefasern ist, das Fasern mit einer 45/45 Grad Faserorientierung aufweist.

15. Stringer in einer Flugzeugstruktur mit einer Verbundstruktur nach einem der Ansprüche 1 bis 8.

## Revendications

1. Structure composite (100) comprenant :
un stratifié multicouche (122) comprenant :
une pluralité de couches (124) de matériau ; et
au moins une couche formant barrière contre les fissures (126) s'étendant dans la pluralité de couches (124) de matériau,
dans laquelle le stratifié multicouche (122) est replié pour délimiter une première région de bande (106) et une deuxième région de bande (108) disposées face à face, et une région d'extrémité repliée (110) délimitée entre la première région de bande (106) et la deuxième région de bande (108), dans laquelle l'au moins une couche formant barrière contre les fissures (126) est configurée pour empêcher la propagation des fissures de s'étendre entre la pluralité de couches (124) de matériau dans la région d'extrémité repliée (110), et
dans laquelle l'au moins une couche formant barrière contre les fissures (126) est fabriquée dans un matériau à fibres de carbone bidirectionnelles, et les couches (124) de matériau de la pluralité ont une configuration structurale différente de celle de l'au moins une couche formant barrière contre les fissures (126).

2. Structure composite (100) selon la revendication 1, dans laquelle le stratifié multicouche (122) est replié pour délimiter en outre, dans l'ordre, une première région de base (112), la première région de bande (106), la région d'extrémité repliée (110), la deuxième région de bande (108), et une deuxième région de base (114), le stratifié multicouche (122) étant replié de telle sorte que les première et deuxième régions de bande (106, 108) soient orientées perpendiculairement ou obliquement par rapport aux première et deuxième régions de base (112, 114).

3. Structure composite (100) selon l'une quelconque des revendications 1 ou 2, dans laquelle les couches (124) de matériau de la pluralité sont fabriquées dans un matériau à fibres de carbone unidirectionnelles.

4. Structure composite (100) selon l'une quelconque des revendications 1 à 3, dans laquelle le stratifié multicouche (122) comprend en outre une couche de détection (138) s'étendant à travers la région d'extrémité repliée (110), dans laquelle la couche de détection est fabriquée dans une matière plastique renforcée de fibres de verre.

5. Structure composite (100) selon l'une quelconque des revendications 1 à 4, dans laquelle l'au moins une couche formant barrière contre les fissures (126) comprend une première couche formant barrière contre les fissures (134) et une deuxième couche formant barrière contre les fissures (136) espacées l'une de l'autre dans le stratifié multicouche (122).

6. Structure composite (100) selon l'une quelconque des revendications 1 à 5, dans laquelle les couches (124) de matériau de la pluralité et l'au moins une couche formant barrière contre les fissures (126) sont alignées de façon coïncidente dans au moins une dimension.

7. Structure composite (100) selon l'une quelconque des revendications 1 à 6, dans laquelle le matériau à fibres de carbone bidirectionnelles de la couche formant barrière contre les fissures (126) est une feuille tissée de fibres de carbone comportant des fibres ayant une orientation de fibres de 0/90 degrés.

8. Structure composite (100) selon l'une quelconque des revendications 1 à 6, dans lequel le matériau à fibres de carbone bidirectionnelles de la couche formant barrière contre les fissures (126) est une feuille tissée de fibres de carbone comportant des fibres ayant une orientation de fibres de 45/45 degrés.

9. Procédé de formation d'une structure composite (100), le procédé comprenant :
la formation d'un stratifié multicouche (122) incluant une pluralité de couches (124) de matériau et au moins une couche formant barrière contre les fissures (126) s'étendant dans la pluralité de couches (124) de matériau ;
le repli du stratifié multicouche (122) pour délimiter une première région de bande (106) et une deuxième région de bande (108) disposées face à face, et une région d'extrémité repliée (110) délimitée entre la première région de bande (106) et la deuxième région de bande (108) ; et
le durcissement du stratifié multicouche (122), dans lequel l'au moins une couche formant barrière contre les fissures (126) est configurée pour empêcher la propagation des fissures de s'étendre entre la pluralité de couches (124) de matériau dans la région d'extrémité repliée (110) ;
dans lequel l'au moins une couche formant barrière contre les fissures (126) est fabriquée dans un matériau à fibres de carbone bidirectionnelles, et les couches (124) de matériau de la pluralité ont une configuration structurale différente de celle de l'au moins une couche formant barrière contre les fissures (126).

10. Procédé selon la revendication 9, dans lequel le repli du stratifié multicouche (122) comprend un repli du stratifié multicouche (122) pour délimiter en outre, dans l'ordre, une première région de base (112), la première région de bande (106), la région d'extrémité repliée (110), la deuxième région de bande (108), et une deuxième région de base (114), le stratifié multicouche (122) étant replié de telle sorte que les première et deuxième régions de bande (108) soient orientées perpendiculairement par rapport aux première et deuxième régions de base (114).

11. Procédé selon l'une quelconque des revendications 9 ou 10, dans lequel la formation d'un stratifié multicouche (122) comprend la formation du stratifié multicouche (122) à partir de la pluralité de couches (124) fabriquées dans un matériau à fibres de carbone unidirectionnelles.

12. Procédé selon l'une quelconque des revendications 9 à 11, dans lequel la formation d'un stratifié multicouche (122) comprend le positionnement d'une couche de détection (138) sur le stratifié multicouche (122) pour qu'elle s'étende à travers la région d'extrémité repliée (110) lorsque le stratifié multicouche (122) est replié, dans lequel la couche de détection est fabriquée dans une matière plastique renforcée de fibres de verre.

13. Procédé selon l'une quelconque des revendications 9 à 12, dans lequel le matériau à fibres de carbone bidirectionnelles de la couche formant barrière contre les fissures (126) est une feuille tissée de fibres de carbone comportant des fibres ayant une orientation de fibres de 0/90 degrés.

14. Procédé selon l'une quelconque des revendications 9 à 12, dans lequel le matériau à fibres de carbone bidirectionnelles de la couche formant barrière contre les fissures (126) est une feuille tissée de fibres de carbone comportant des fibres ayant une orientation de fibres de 45/45 degrés.

15. Lisse dans une structure d'aéronef comprenant une structure composite telle que définie dans l'une quelconque des revendications 1 à 8.
